# EUROPÄISCHE PATENTSCHRIFT

(11) **EP 0 517 947 B1**
(45) Veröffentlichungstag und Bekanntmachung des Hinweises auf die Patenterteilung: **19.04.1995**
(21) Anmeldenummer: 91109978.6
(22) Anmeldetag: 13.06.1991
(51) Int. Cl.: F16N 31/00

(54) **Vorrichtung zum Auffangen von Öl**
Oil draining device
Dispositif de vidanger l'huile

(43) Veröffentlichungstag der Anmeldung: 16.12.1992
(73) Patentinhaber: Wendorff, Gerda, D-65232 Taunusstein (DE)
(72) Erfinder: Wendorff, Ernst, W-6204 Taunusstein 4 (DE)
(74) Vertreter: Blumbach, Kramer & Partner

(56) Entgegenhaltungen:
- DE-A- 3 941 367
- US-A- 3 228 491
- US-A- 3 329 231
- US-A- 3 918 542
- US-A- 3 997 073
- US-A- 4 246 982
- US-A- 4 484 661
- US-A- 4 923 052

## Beschreibung

Die Erfindung bezieht sich auf eine Auffangvorrichtung für abtropfendes Öl von Kraftfahrzeugen mit einer Wanne, die einen Bereich zur Aufnahme von saugfähigem Absorptionsmaterial aufweist, und mit einer Abdeckung, die über dem Absorptionsmaterial in der Wanne angeordnet ist.

Es gibt vielerlei Vorschläge (US-A-3 329 231, US-A-3 918 542, US-A-4 246 982, US-A-4 484 621, US-A-4 923 052), das von abgestellten Fahrzeugen abtropfende Schmiermittel durch geeignete Vorrichtungen aufzufangen. Der Auffangbereich des Schmiermittels ist dabei nicht befahrbar. Teilweise wird saugfähiges Material in Form von Schwämmen, Zellulosematerial oder Sand benutzt, und solches Absorptionsmaterial kann auch ausgetauscht werden. Zum Abdecken größerer, befahrbarer Flächen eignen sich solche Systeme nicht.

Bei einer Auffangvorrichtung nach dem Oberbegriff des Anspruchs 1 (US-A-3 997 073) ist eine Schmiermittelauffangwanne zur Anwendung unter einem Kraftfahrzeug vorgesehen, deren mittlerer Bereich eine Aussparung zur Aufnahme des Absorptionsmaterials aufweist, das durch einen Deckel nach oben abgedeckt ist. Zu der Aussparung führen eine Reihe von Nuten in der Bodenwand der Wanne, so daß auf die Bodenwand auftropfendes Schmiermittel mit leichtem Gefälle in die mittige Aussparung gelangen und von dem Absorptionsmaterial aufgesaugt werden kann. Das Material der Wanne ist flexibel genug, bei gelegentlichem Befahren durch ein Fahrzeugrad auszuweichen und sich am Untergrund anzuschmiegen. An die Bedeckung großer Flächen ist nicht gedacht worden, abgesehen davon, daß sich die Oberfläche der Wanne nicht gleichzeitig zum Befahren und Hinleiten des Schmiermittels zur zentralen Aussparung eignet.

Der Erfindung liegt die Aufgabe zugrunde, eine Auffangvorrichtung der eingangs angegebenen Art zu schaffen, die sich zum Auffangen von Tropföl bei unterschiedlichsten Arbeits- und Abstellplätzen eignet und insbesondere die Abdeckung großer Flächen ermöglicht. Ferner soll die Entsorgung einfach und umweltschonend sein.

Die gestellte Aufgabe wird durch die Maßnahmen des Anspruchs 1 gelöst.

Eine Weiterbildung der Vorrichtung sieht vor, daß eine erfindungsgemäß ausgeführte Platte mit einer entfernbaren Bodenabdeckung zum Öffnen der Hohlräume versehen ist.

Zur leichteren Handhabung kann die Platte in einzelne herausnehmbare Felder unterteilt sein, die zwischen Stegen angeordnet sind.

In vorteilhafter Weise ist die Auffangwanne auf dem Boden befestigt oder in diesen eingelassen und steht etwa 30 bis 40 mm über den Boden hoch.

Um das Auffahren auf die Auffangvorrichtung zu erleichtern, ist die Auffangwanne mit einer Anfahrschräge versehen.

Eine Weiterbildung der Vorrichtung sieht vor, daß die Auffangwannen kassettenartig nebeneinander gesetzt den Boden bedecken.

Durch die Verwendung regenerierbarer Füllstoffe und den Austausch des Füllmaterials vor Ort wird eine einfache und umweltschonende Entsorgung ermöglicht.

Die Erfindung wird nachstehend anhand mehrerer Ausführungsbeispiele unter Bezugnahme auf die beigefügten Zeichnungen näher erläutert.

Es zeigen:
- Fig. 1: einen Querschnitt der Vorrichtung zum Auffangen von Öl, bestehend aus einer in einer Auffangwanne angeordneten Platte,
- Fig. 2: eine Draufsicht der Auffangvorrichtung nach Fig. 1,
- Fig. 3: eine Draufsicht auf die Auffangvorrichtung nach Fig. 1 (teilweise gebrochen), wobei die Platte in einzelne herausnehmbare Felder unterteilt ist,
- Fig. 4: eine Queransicht der Platte nach Fig. 3 entlang der Schnittlinie 5-5 und
- Fig. 5: eine Queransicht der Platte nach Fig. 3 entlang der Schnittlinie 6-6.

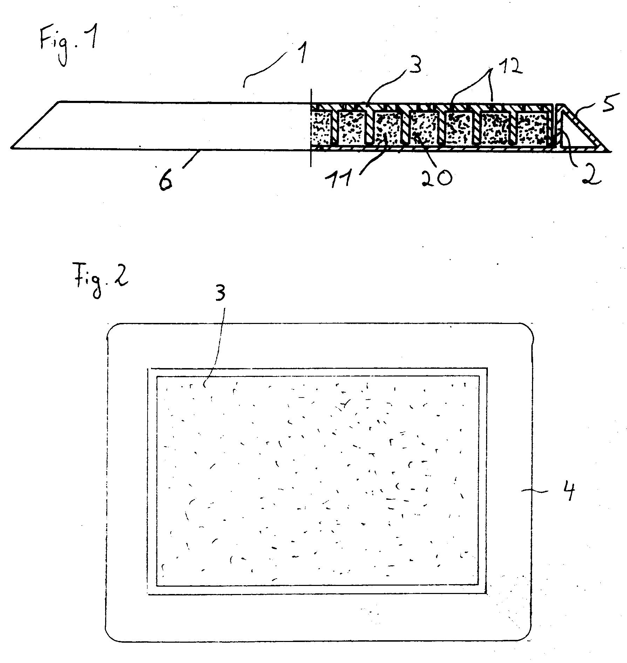

In Fig. 1 ist der Querschnitt durch eine Auffangvorrichtung 1 dargestellt, die aus einer Auffangwanne 2 und einer herausnehmbaren Platte 3 besteht. Ein Außenrand 4 der Auffangwanne ist als Anfahrrampe 5 ausgebildet, die mit dem Wannenboden 6 einen Winkel von 45° einschließt. Die in der Auffangwanne 2 eingesetzte Platte 3 besteht vorzugsweise aus Keramik oder Kunststoff, wie glasfaserverstärktes Polyester. Ein derartiges Material hat den Vorteil, daß es kein Öl aufsaugt und somit einfach zu reinigen und mehrfach wiederverwendbar ist.

Fig. 2 zeigt in Draufsicht die von einem Außenrand 4 der Auffangwanne 2 umgebene Platte 3.

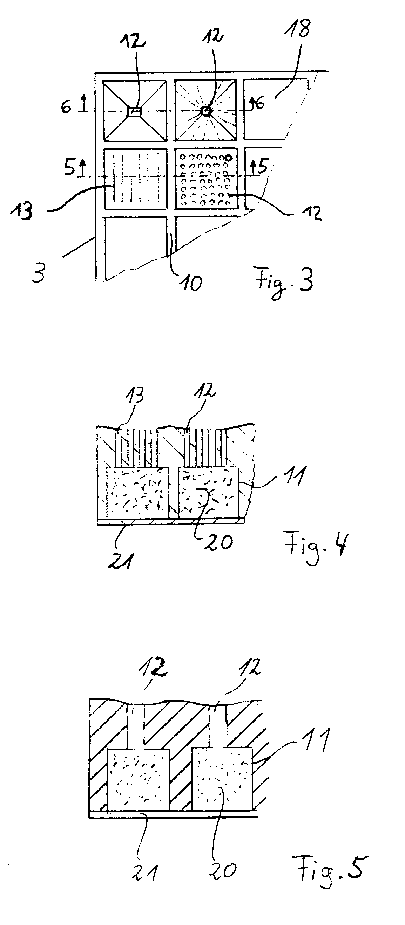

In der in Fig. 3 dargestellten Draufsicht auf die Platte 3 ist zu sehen, wie diese durch quer und längs verlaufende Stege 10 in einzelne Felder 18 unterteilt ist. Diese Felder 18 können verschiedenartig ausgestaltet sein. In Fig. 3 sind vier verschiedene Ausführungsformen dargestellt. Die Felder können mit mittigen Löchern 12 vorgesehen sein, wie links oben zu sehen ist, wobei die Felder von den Stegen 10 sich leicht zur Mitte der Löcher 12 absenken, wie im einzelnen aus Fig. 5 zu entnehmen ist.

Es ist aber auch möglich, die Felder 18 mit einer Vielzahl von Löchern 12 oder einer Vielzahl von Schlitzen 13 auszustatten, wie die darunter liegenden Felder in Fig. 3 zeigen und wie es im einzelnen in Fig. 4 näher dargestellt ist. Wie weiter aus den Fig. 4 und 5 näher zu entnehmen ist, sind die Stege leicht konvex gewölbt, um sicherzustellen, daß das abtropfende Öl in die Löcher 12 bzw. Schlitze 13 abfließt. Von dort gelangt das Öl in die Hohlräume 11, die mit einem Füllmaterial 20 aus saugfähigem Material ausgefüllt sind.

Hierzu eignet sich vorzugsweise Sägemehl. Es ist aber auch möglich, Kunststoffe oder anderes saugfähiges Material in den Hohlräumen 11 vorzusehen.

Um eine gleichmäßige Verteilung der anfallenden Ölmenge innerhalb der Platte 3 zu gewährleisten, können die Hohlräume 11 auch miteinander verbunden sein.

Um die Hohlräume 11 öffnen zu können und das darin befindliche Material zu entfernen, wenn es sich mit Öl vollgesaugt hat, kann die Bodenabdeckung 21 entfernt werden. Die Bodenabdeckung 21 ist an der Seite der Platte 3 festgeklemmt. Zu diesem Zweck können nicht dargestellte klemmende Verriegelungen vorgesehen werden, gegebenenfalls auch mit Federelementen, die in Ausbuchtungen in der Platte 3 eingreifen. Dadurch wird es ermöglicht, vor Ort den Austausch des Füllmaterials vorzunehmen, so daß der Transport der Platten zu bestimmten Stellen, an denen der Füllmaterialaustausch vorgenommen wird, vermieden werden kann. Insbesondere ist es auch möglich, bei Anordnungen von mehreren Auffangwannen 2 nur in einer bestimmten Auffangwanne 2 das Füllmaterial 20 in der Platte 3 auszutauschen, wenn an einer bestimmten Stelle durch das Auslaufen von Öl eine besonders starke Verschmutzung der Platte 3 aufgetreten ist. Durch die Verwendung regenerierbarer Füllstoffe kann die Umweltbelastung reduziert werden.

Als Schutz vor Unbefugten kann die Vorrichtung so ausgebildet sein, daß ein Auswechseln der Platte bzw. ein Austausch des Füllmaterials nur maschinell bzw. mit speziellen Vorrichtungen erfolgen kann.

Mit dem erfindungsgemäßen Verfahren können große Bereiche ausgelegt werden, um damit die darunter liegende Bodenoberfläche vor Verschmutzung zu schützen. Darüber hinaus können überdachte sowie unüberdachte Park- und Abstellplätze mit dieser Vorrichtung ausgerüstet werden. Auf diese Weise wird der darunter liegende Boden vor abtropfendem Öl geschützt und das Wegspülen von Ölrückständen durch Regenwasser in die Kanalisation und dadurch eine Verunreinigung des Grundwassers verhindert.

## Patentansprüche

1. Auffangvorrichtung für abtropfendes Öl von Kraftfahrzeugen mit folgenden Merkmalen:
eine Wanne (2) weist einen Bereich zur Aufnahme von saugfähigem Absorptionsmaterial (20) auf;
eine Abdeckung ist über dem Absorptionsmaterial (20) in der Wanne (2) angeordnet,
dadurch gekennzeichnet,
daß die Abdeckung eine befahrbare Platte (3) enthält, die nach oben reichende Löcher (12) oder Schlitze (13) und nach unten reichende Stege (10) aufweist, mit denen die Platte (3) in die Wanne (2) eingesetzt ist,
daß die Wanne (2) bis auf einen Außenrand (4) abgedeckt ist und
daß das Absorptionsmaterial (20) in Kammern oder Hohlräumen (11) aufgenommen wird, die sich zwischen den Stegen (10) befinden.

2. Vorrichtung nach Anspruch 1,
dadurch gekennzeichnet,
daß die Platte (3) mit einer entfernbaren Bodenabdeckung (21) zum Öffnen der Hohlräume (11) versehen ist.

3. Vorrichtung nach Anspruch 1 oder 2,
dadurch gekennzeichnet,
daß die Platte (3) in einzeln herausnehmbare Felder (18) unterteilt ist, die zwischen Stegen (10) angeordnet sind.

4. Vorrichtung nach einem der Ansprüche 1 bis 3,
dadurch gekennzeichnet,
daß die Aufnahmewanne (2) auf dem Boden befestigt oder in diesen eingelassen ist und etwa 30 bis 40 mm über den Boden hochsteht.

5. Vorrichtung nach einem der Ansprüche 1 bis 4,
dadurch gekennzeichnet,
daß die Aufnahmewanne (2) mit einer Anfahrschräge (5) versehen ist.

6. Vorrichtung nach einem der Ansprüche 1 bis 5,
dadurch gekennzeichnet,
daß mehrere Aufnahmewannen (2) cassettenartig nebeneinandergesetzt den Boden bedecken.

## Claims

1. A device for trapping oil dripping from motor vehicles, having the following features:
a trough (2) has a zone for receiving absorbent material (20);
a cover in disposed above the absorbent material (20) in the trough (2),
characterised in that
the cover contains a plate (3) over which the vehicle can drive and which has upwardly extending holes (12) or slots (13) and downwardly extending webs (10) by means of which the plate (3) is inserted in the trough (2),
in that the trough (2) is covered except for an outer edge (4) and
in that the absorbent material (20) is received in chambers or cavities (11) between the webs (10).

2. A device according to claim 1, characterised in that the plate (3) is provided with a removable bottom cover (21) to open the cavities (11).

3. A device according to claim 1 or 2, characterised in that the plate (3) is divided into individually removable compartments (18) disposed between webs (10).

4. A device according to any one of claims 1 to 3, characterised in that the receiving trough (2) is fixed on the ground or is recessed into the latter and projects about 30 to 40 mm above the ground.

5. A device according to any one of claims 1 to 4, characterised in that the reception trough (2) has a ramp (5).

6. A device according to any one of claims 1 to 5, characterised in that a plurality of reception troughs (2) placed side by side modular fashion cover the ground.

## Revendications

1. Dispositif de vidange pour de l'huile s'égouttant de véhicules à moteur, ayant les caractéristiques suivantes:
une cuve (2) présente une zone destinée à recevoir un matériau d'absorption (20) absorbant;
un couvercle est placé dans la cuve (2), sur le matériau d'absorption,
caractérisé
en ce que le recouvrement contient une plaque (3) carrossable, qui présente des trous(12) ou des fentes (13) s'étendant vers le haut et des barrettes (10) s'étendant vers le bas, avec lesquelles la plaque (3) est logée dans la cuve (2),
en ce que la cuve (2) est recouverte jusqu'à un bord extérieur (4), et
en ce que le matériau d'absorption (20) est reçu dans des chambres ou des espaces creux (11) qui se trouvent entre les barrettes (10).

2. Dispositif selon la revendication 1,
caractérisé en ce que
la plaque (3) est munie d'un recouvrement du fond (21), démontable, pour ouvrir les espaces creux (11).

3. Dispositif selon la revendication 1 ou 2,
caractérisé en ce que
la plaque (3) est subdivisée en champs (18) détachables individuellement, qui sont placés entre les barrettes (10).

4. Dispositif selon les revendications 1 à 3,
caractérisé en ce que
la cuve (2) de réception est fixée au sol ou est y encastrée et se trouve à une hauteur du sol de 30 à 40 mm environ.

5. Dispositif selon une des revendications 1 à 4,
caractérisé en ce que
la cuve (2) de réception est munie d'une rampe de démarrage (5).

6. Dispositif selon une des revendications 1 à 5,
caractérisé en ce que
plusieurs cuves (2) de réception recouvrent le sol, placées les unes à côté des autres, comme des caissons.
